Europäisches Patentamt

European Patent Office

Office européen des brevets

(19)

(11) Veröffentlichungsnummer: **0 054 099**
**B1**

# (12) EUROPÄISCHE PATENTSCHRIFT

(45) Veröffentlichungstag der Patentschrift:
**27.02.85**

(21) Anmeldenummer: **81105501.1**

(22) Anmeldetag: **14.07.81**

(51) Int. Cl.⁴: **B 03 C 3/00,** C 10 K 1/02

(54) **Verfahren und Vorrichtung zum Reinigen Staub enthaltender, heisser Gase, insbesondere des bei Stahl- und Eisenbadreaktoren anfallenden Kohlegases.**

(30) Priorität: **31.10.80 DE 3041010**

(43) Veröffentlichungstag der Anmeldung:
**23.06.82 Patentblatt 82/25**

(45) Bekanntmachung des Hinweises auf die Patenterteilung:
**27.02.85 Patentblatt 85/9**

(84) Benannte Vertragsstaaten:
**AT BE FR GB IT LU NL SE**

(56) Entgegenhaltungen:
**BE - A - 361 167**
**DE - A - 530 218**
**DE - A - 2 646 865**
**DE - C - 968 619**

**"Control of particulate emissions in the Primary Non Ferrous Metals Industries"**, US-EPA, March 1979, P. 331-343

(73) Patentinhaber: **KLÖCKNER-WERKE AKTIENGESELLSCHAFT, Klöcknerstrasse 29, D-4100 Duisburg 1 (DE)**

(72) Erfinder: **Chitil, Manfred, Dr.-Ing., Thorn-Prikker-Strasse 41, D-4150 Krefeld-Bockum (DE)**

(74) Vertreter: **Kador . Klunker . Schmitt-Nilson . Hirsch, Corneliusstrasse 15, D-8000 München 5 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von dem aus der DE-A Nr. 968619 bekannten Verfahren zum Reinigen Staub enthaltender, heisser Gase, insbesondere des mit Stahl- bzw. Eisenbadreaktoren erzeugten Kohlegases, bei dem das zu reinigende, heisse Gas auf eine erste Temperatur abgekühlt und bei dieser ersten Temperatur in einem ersten Elektrofilter gereinigt wird, anschliessend in einem zweiten Abkühlungsschritt mittels eines Wärmetauschers auf eine Temperatur von unter 100° C abgekühlt und anschliessend bei dieser zweiten Temperatur in einem zweiten Elektrofilter entstaubt wird.

Bei diesem bekannten Verfahren wird die Kühlung und Reinigung der staubhaltigen Gase durch direkte Kühlung mit Hilfe eines im Kreislauf geführten, rückgekühlten Kühlmittels und anschliessender elektrischer Reinigung der gekühlten, nassen Gase in zwei Stufen durchgeführt. Die erste Stufe arbeitet bei etwa 50, die zweite bei etwa 25° C. Damit wird in dem zwischen den beiden Elektrofiltern vorgesehenen Wärmetauscher lediglich ein sehr geringer Anteil der im Gas vorhandenen, physikalische Wärme zurückgewonnen; der allergrösste Teil der Wärmeenergie wird für die Verdampfungskühlung benutzt.

Auch bei den bekannten Verfahren nach der DE-A Nr. 530218 und der BE-A Nr. 361167 erfolgt beim ersten Abkühlungsschritt eine Verdampfungskühlung. Die im heissen, zu reinigenden Gas enthaltene, physikalische Wärme wird dazu genutzt, Wasser zu verdampfen; das Gas wird angefeuchtet. Dieses Anfeuchten wird auch als Konditionieren bezeichnet und dient dazu, den Staubwiderstand so einzustellen, dass bei der gewählten Temperatur nach dem ersten Abkühlungsschritt eine wirkungsvolle Elektrofilterung möglich ist. In einem späteren Schritt wird dem Gas die Feuchtigkeit wieder entzogen (DE-A Nr. 968619).

Ausgehend von dem aus der DE-A Nr. 968619 bekannten Verfahren ist es Aufgabe der Erfindung, die Nachteile des bekannten Verfahrens und der nach diesem Verfahren arbeitenden Vorrichtung zu vermeiden und ein Verfahren einschliesslich der nach diesem Verfahren arbeitenden Vorrichtung zu schaffen, bei dem mit wirtschaftlichen Mitteln Gas auf einen praktisch vernachlässigbaren Staubgehalt kostengünstig entstaubt wird.

Diese Aufgabe wird ausgehend von dem bekannten Verfahren der eingangs genannten Art dadurch gelöst, dass das zu reinigende, heisse Gas vor dem ersten Elektrofilter in einem konvektiv und nach dem Strahlungsprinzip arbeitenden Wärmetauscher auf die erste Temperatur von etwa 300° C in völlig trockenem Zustand abgekühlt wird, und dass das Gas im zweiten Elektrofilter auf einen Staubgehalt unter 5 mg/m³ gereinigt wird.

Die Aufgabe wird weiterhin durch eine Vorrichtung mit den Merkmalen des Anspruchs 4 gelöst.

Die Wahl der Gastemperatur nach dem ersten Abkühlungsschritt und auch die Wahl der Gastemperatur nach dem zweiten Abkühlungsschritt hat entscheidenden Einfluss auf die Wirtschaftlichkeit des erfindungsgemässen Verfahrens. Nach dem ersten Abkühlungsschritt soll die Temperatur des zu reinigenden Kohlegases nicht zu hoch liegen, damit herkömmliche und normale Bauelemente für den ersten Elektrofilter eingesetzt werden können. Dieser erste Elektrofilter stellt sich im wesentlichen auf die Temperatur ein, die das Kohlegas nach dem ersten Abkühlungsschritt hat. Andererseits soll die Gastemperatur nach dem ersten Abkühlungsschritt so gewählt werden, dass der elektrische Staubwiderstand, der sich mit der Gastemperatur ändert, nicht zu hoch ist. Die Gastemperatur nach dem ersten Abkühlungsschritt wird also auch durch die Art des anfallenden Staubes bestimmt und lässt sich daher nicht exakt fixieren. In vielen Versuchen hat sich eine Gastemperatur von 300° C nach dem ersten Abkühlungsschritt jedoch als sehr vorteilhaft erwiesen, weil bei diesen Temperaturen einerseits herkömmliche Isolatoren und andere Materialien für das Elektrofilter eingesetzt werden, andererseits aber auch elektrische Staubwiderstand ausreichend gering ist.

Principiell wäre es möglich, das erste Elektrofilter so auszulegen, dass in einer einzigen Stufe der Reststaubgehalt auf den gewünschten Wert (z.B. unterhalb 5 mg/cm³) erniedrigt wird. Dem stehen jedoch vor allem wirtschaftliche Gründe entgegen.

Bei der Wahl der Gastemperatur nach dem zweiten Abkühlungsschritt spielt die thermische Belastbarkeit des nachgeschalteten Elektrofilters keine Rolle mehr. Entscheidend sind für die Temperaturwahl vielmehr praktische Gründe, insbesondere eine für die Einspeisung in Gasversorgungsnetze ausreichend geringe Temperatur. Weiterhin sollte der elektrische Staubwiderstand bei der gewählten Temperatur ausreichend klein sein.

Prinzipiell wäre es auch möglich, das zu reinigende Kohlegas bereits vor dem ersten Elektrofilter auf etwa 50° C abzukühlen. Dies hätte jdoch zur Folge, dass bereits nach sehr kurzer Betriebszeit der erste Wärmetauscher versagt — falls er nicht überdimensioniert ist —, weil die anfallenden Staubmengen den Wärmeübergang im Wärmetauscher des ersten Abkühlungsschrittes bereits nach kurzer Betriebszeit zu stark verringern.

Mit den erfindungsgemässen Massnahmen ist es möglich, einerseits die gesamte Anlage kostengünstig auszulegen und andererseits eine gute Gasreinigung durchzuführen.

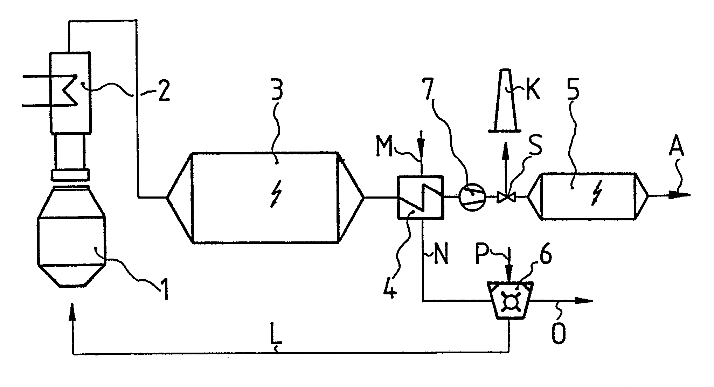

Die Erfindung wird im folgenden anhand eines Ausführungsbeispiels unter Bezugnahme auf die Zeichnung näher erläutert. In dieser Zeichnung ist eine Prinzipsskizze einer an einen Eisenbadreaktor angeschlossenen Vorrichtung zur Gasreinigung gezeigt.

Mit Bezugsziffer 1 ist ein Eisenbadreaktor 1 gezeichnet, dem über eine Leitung L von unten feinkörnige Kohle mittels eines Trägergases, beispielsweise Kohlegas oder Stickstoff, zugeführt wird. Das oben aus dem Eisenbadreaktor 1 austretende Kohlegas hat eine Temperatur von etwa 1500° C. Es durchströmt zunächst einen nach dem Strahlungsprinzip und konvektiv arbeitenden ersten Wärmetauscher 2, in dem das Kohlegas auf etwa 300° C abgekühlt wird. Mit dieser Temperatur durchströmt das gekühlte Kohlegas einen ersten Elektrofilter 3, in dem der Grossteil des Staubes abgeschieden wird. Am Ausgang des ersten Elektrofilters 3 hat das Kohlegas einen Staubgehalt von etwa 50 mg/m³.

Es wird nun einem zweiten Wärmetauscher 4 zugeführt, bei dem der Wärmeübergang hauptsächlich durch Wärmeleitung erfolgt und in dem es auf etwa 50° C abgekühlt wird. Danach durchströmt das Kohlegas einen zweiten Elektrofilter 5, in dem der Staubgehalt auf etwa 5 mg/m³ reduziert wird. Das bei A aus dem zweiten Elektrofilter 5 austretende Kohlegas kann dann in ein (nicht dargestelltes) Gasversorgungsnetz eingespeist werden. Der Staubgehalt des Kohlegases bei Punkt A ist ausreichend niedrig, um mit dem Kohlegas Gasturbinen betreiben zu können.

Der zweite Wärmetauscher 4 wird im Kreuzstrom von Stickstoff und Luft durchströmt, die über eine Leitung M dem zweiten Wärmetauscher 4 zugeführt werden. Dieses im Wärmetauscher 4 erhitzte Gemisch aus Luft und Stickstoff wird über eine Leitung N einer als Mühle 6 ausgebildeten Einrichtung zum Zerkleinern und Trocknen von Kohle zugeführt und verlässt diese Mühle 6 über eine Leitung O. Über eine Zuführung P wird stückige Kohle in die Mühle eingegeben. Die in der Mühle 6 zerkleinerte und getrocknete Kohle wird mit einem geeigneten Fördergas, z.B. Kohlegas, über die Leitung L von unten in den Eisenbadreaktor 1 eingeblasen. Zur Aufrechterhaltung der Strömung und zur Vorgabe des Durchsatzes ist ein Gebläse 7 zwischen dem zweiten Wärmetauscher 4 und dem zweiten Elektrofilter 5 angeordnet. Durch die Anordnung hinter dem ersten Wärmetauscher 3 wird erreicht, dass das Gebläse 7 praktisch frei von Staub bleibt.

Schliesslich ist zwischen dem Gebläse 7 und dem zweiten Elektrofilter 5 ein Umschaltventil S vorgesehen. Bei normaler Kohlegaserzeugung im Eisenbadreaktor 1 verbindet es das Gebläse 7 mit dem zweiten Elektrofilter 5, so dass das erzeugte Kohlegas in ein Gasversorgungsnetz eingespeist wird. Sobald jedoch im Eisenbadreaktor 1 Schlacke abgestochen werden muss, eine neue Charge eingesetzt wird oder der Eisenbadreaktor 1 aus anderen Gründen nicht im Normalzustand arbeitet, wird das Umschaltventil S so betätigt, dass die anfallenden Gase nunmehr einem Kamin K zugeleitet werden, wo sie abgefackelt werden. Mittels des Umschaltventils S ist es somit möglich, dass minderwertiges Kohlegas nicht in das Gasversorgungsnetz, das bei Punkt A angeschlossen ist, eingespeist wird.

## Patentansprüche

1. Verfahren zum Reinigen Staub enthaltender, heisser Gase, insbesondere des mit Stahl- bzw. Eisenbadreaktoren (1) erzeugten Kohlengases, bei dem das zu reinigende, heisse Gas auf eine erste Temperatur abgekühlt und bei dieser ersten Temperatur in einem ersten Elektrofilter (3) gereinigt wird, anschliessend in einem zweiten Abkühlungsschritt mittels eines Wärmetauschers (4) auf eine Temperatur von unter 100° C abgekühlt und abschliessend bei dieser zweiten Temperatur in einem zweiten Elektrofilter (5) entstaubt wird, dadurch gekennzeichnet, dass das zu reinigende, heisse Gas vor dem ersten Elektrofilter (3) in einem konvektiv und nach dem Strahlungsprinzip arbeitenden Wärmetauscher (2) auf die erste Temperatur von etwa 300° C in völlig trockenem Zustand abgekühlt wird, und dass das Gas im zweiten Elektrofilter (5) auf einen Staubgehalt unter 5 mg/m³ gereinigt wird.

2. Verfahren nach Anspruch 1, dadurch gekennzeichnet, dass das Gas im ersten Elektrofilter (3) auf einen Staubgehalt von etwa 50 mg/m³ gebracht wird.

3. Verfahren nach einem der Ansprüche 1 oder 2, dadurch gekennzeichnet, dass die bei einem Abkühlungsschritt in einem Wärmetauscher anfallende Wärme zur Trocknung der in den Stahl- bzw. Eisenbadreaktor (1) einzuspeisenden Kohle benutzt wird.

4. Vorrichtung zur Durchführung des Verfahrens nach einem der Ansprüche 1 bis 3 mit einer ersten Kühlstufe (2), einem dieser nachgeschalteten ersten Elektrofilter (3), einer diesem ersten Elektrofilter nachgeschalteten zweiten Kühlstufe in Form eines Wärmetauschers (4) und einem dieser zweiten Kühlstufe nachgeschalteten, zweiten Elektrofilter (5), dadurch gekennzeichnet, dass die erste Kühlstufe als ein Wärmetauscher (2) ausgeführt ist, dass der zweite Wärmetauscher (4) abwärmemässig mit einer Mühle (6) zum Zerkleinern von Kohle verbunden ist, dass zwischen dem ersten Elektrofilter (3) und dem zweiten Elektrofilter (5) ein Gebläse (7) für das Kohlegas angeordnet ist, und dass zwischen dem zweiten Wärmetauscher (4) und dem zweiten Elektrofilter (5) ein Umschaltventil (S) angeordnet ist, dessen einer Ausgang mit dem zweiten Elektrofilter (5) und dessen anderer Ausgang mit einem Kamin (K) verbunden ist.

## Revendications

1. Procédé pour épurer des gaz chauds contenant des poussières, particulièrement le gaz de charbon produit dans des réacteurs à bain d'acier ou de fer (1), selon lequel le gaz chaud à épurer est refroidi à une première température, est épuré à cette première température dans un premier électrofiltre (3), est ensuite refroidi dans un second stade de refroidissement à une température inférieure à 100° C au moyen d'un échangeur thermique (4) et, enfin, à cette deuxième température dépoussiéré dans un second électrofiltre (5), caractérisé en ce que le gaz chaud à épurer est refroidi à la première température d'environ 300° C à l'état totalement sec, avant le premier électrofiltre (3), dans un échangeur thermique (2) à convexion fonctionnant selon le principe du rayonnement, et que le gaz est épuré dans un second électrofiltre (5) jusqu'à une teneur en poussière inférieure à 5 mg/m³.

2. Procédé selon la revendication 1, caractérisé en ce que, dans le premier électrofiltre (3), le gaz est amené à une teneur en poussière d'environ 50 mg/m³.

3. Procédé selon l'une des revendications 1 ou 2, caractérisé en ce que la chaleur produite dans un échangeur thermique dans un stade de refroidissement est utilisée pour sécher le charbon qui va être introduit dans le réacteur à bain d'acier ou de fer (1).

4. Dispositif pour mettre en œuvre le procédé selon l'une des revendications 1 à 3, comportant un premier étage de refroidissement (2), un premier électrofiltre (3) monté à la suite de ce dernier, un second étage de refroidissement sous la forme d'un échangeur thermique (4) monté à la suite de ce premier électrofiltre, et un second électrofiltre (5) monté à la suite de ce second étage de refroidissement, caractérisé en ce que le premier étage de refroidissement est réalisé sous forme d'échangeur thermique (2), que le second échangeur thermique (4) est relié, pour récupérer la chaleur, avec un broyeur (6) pour fractionner le charbon, et qu'entre le premier électrofiltre (3) et le second électrofiltre (5) est disposée une soufflante pour le gaz de charbon, et qu'entre le second échangeur thermique (4) et le second électrofiltre (5) est disposée une vanne d'inversion (S), dont une sortie est reliée au second électrofiltre (5) et dont l'autre sortie est reliée à une cheminée (K).

**Claims**

1. A process for cleaning hot gases containing dust, in particular carbon gas liberated from steel and iron bath reactors (1), by which the hot gas to be cleaned is cooled down to a first temperature and cleaned in a first electrostatic filter (3) at this first temperature, then cooled down to a temperature lower than 100° C by means of a heat exchanger (4) in a second cooling step, and finally dedusted in a second electrostatic filter (5) at this second temperature, characterized in that, before the first electrostatic filter (3), the hot gas to be cleaned is cooled down to the first temperature of approximately 300° C in a completely dry state in a heat exchanger (2) which works convectively and according to the radiation principle, and in that the gas is cleaned in the second electrostatic filter (5) to have a dust content of less than 5 mg/m³.

2. The process as in Claim 1, characterized in that the gas is made to have a dust content of approximately 50 mg/m³ in the first electrostatic filter (3).

3. The process as in Claim 1 or 2, characterized in that the heat which arises in a heat exchanger during a cooling step is used to dry the carbon to be fed into the steel or iron bath reactor (1).

4. An apparatus for performing the process as in any of Claims 1 to 3 having a first cooling stage (2), a first electrostatic filter (3) following said cooling stage, a second cooling stage in the form of a heat exchanger (4) following said first electrostatic filter, and a second electrostatic filter (5) following said second cooling stage, characterized in that the first cooling stage is designed as a heat exchanger (2), in that the second heat exchanger (4) is connected in terms of waste heat to a mill (6) for crushing carbon, in that a fan (7) for the carbon gas is arranged between the first electrostatic filter (3) and the second electrostatic filter (5), and in that a reversing valve (S) is arranged between the second heat exchanger (4) and the second electrostatic filter (5), one outlet of said valve being connected to the second electrostatic filter (5) and the other outlet of said valve being connected to a chimney (K).